# EUROPÄISCHE PATENTSCHRIFT

(11) **EP 0 599 213 B1**
(45) Veröffentlichungstag und Bekanntmachung des Hinweises auf die Patenterteilung: **10.02.1999**
(21) Anmeldenummer: 93118643.1
(22) Anmeldetag: 19.11.1993
(51) Int. Cl.: G02B 6/42, G02B 6/30

(54) **Anordnung zur Ankopplung eines Lichtwellenleiters an mindestens ein lichtaussendendes oder -empfangendes Element**
Device for coupling a light wave guide to at least one light emitting or receiving element
Dispositif de couplage d'un guide d'ondes lumineuses avec au moins un élément émettant ou recevant de la lumière

(30) Priorität: 24.04.1993 DE 4313486 U; 25.11.1992 DE 9217928 U
(43) Veröffentlichungstag der Anmeldung: 01.06.1994
(73) Patentinhaber: ROBERT BOSCH GMBH, 70442 Stuttgart (DE)
(72) Erfinder: Schwaderer, Bernhard, Dr.-Ing., D-71554 Weissach i.T. (DE); Hauer, Heiner, Dipl.-Ing., D-70734 Fellbach (DE); Kuke, Albrecht, Dr. rer. nat., D-71549 Auenwald (DE)

(56) Entgegenhaltungen:
- EP-A- 0 192 850
- EP-A- 0 331 331
- EP-A- 0 366 974
- DE-A- 3 833 413
- US-A- 4 711 997
- US-A- 5 101 460
- PATENT ABSTRACTS OF JAPAN vol. 4, no. 189 (E-39) (671) 25. Dezember 1980 & JP-A-55 132 076 (NIPPON DENSHIN DENWA KOSHA) 14. Oktober 1980
- PATENT ABSTRACTS OF JAPAN Bd. 10, Nr. 308 (P-508) 2364 21 Oktober 1986 & JP-A-61 121 014 (NEC CORP) 09 Juni 1986

## Beschreibung

Die Erfindung betrifft eine Anordnung nach dem Oberbegriff des Patentanspruches 1.

Bekannt ist ein monolithisch integriertes Halbleiterbauelement, bei dem ein Lichtwellenleiter und ein Fotodetektor auf einander gegenüberliegenden Seiten eines Halbleitersubstrates aufgebracht sind und bei dem eine Reflexionsfläche, vorgesehen ist, die Strahlung aus dem Lichtwellenleiter aus koppelt und durch das Halbleitersubstrat hindurch dem Fotodetektor zuführt (EP 0 192 850 A1).

In der US 5,101,460 ist beschrieben, wie ein einzelner Lichtstrahl durch ein holographisches Element, das sich zwischen zwei transparenten Trägern befindet, in mehrere Lichtstrahlen aufgeteilt wird, so daß jeder einzelne Lichtstrahl zu dem entsprechenden Licht empfangenden Element abgelenkt wird.

Aus der DE 39 14 835 C1 ist eine Anordnung zur Ankopplung eines Lichtwellenleiters an ein optisches Sende- oder Empfangselement bekannt. Dabei befinden sich der Lichtwellenleiter und das optische Sende- bzw. Empfangselement auf verschiedenen Trägern, die mit ihren Trägeroberflächen verschiebbar aufeinanderliegen. Das Lichtbündel zwischen dem Lichtwellenleiter einerseits und dem Sende- bzw. Empfangselement andererseits gelangt durch zweimalige Spiegelung an je einer auf den Trägern befindlichen Spiegelebene vom Lichtwellenleiter zum optisch aktiven Element oder umgekehrt. Durch Verschieben der Träger gegeneinander wird eine laterale Justierung des Lichtbündels gegenüber dem Lichtwellenleiter bzw. optisch aktiven Element erreicht.

Es ist Aufgabe der Erfindung, eine Anordnung anzugeben mit der mehrere lichtaussendende und/oder -empfangende Elemente an einen Lichtwellenleiter angekoppelt werden können. Insbesondere soll diese Ankopplung auch wahlweise ermöglicht werden.

Die Aufgabe wird durch eine Anordnung mit den Merkmalen des Patentanspruches 1 gelöst. Vorteilhafte Weiterbildungen sind in den Unteransprüchen angegeben.

Mit der erfindungsgemäßen Anordnung kann sowohl eine Lichtleitfaser, die beispielsweise in einem Träger liegt, als auch ein Streifenleiter angekoppelt werden. Es ist eine Ankopplung an mehrere lichtaussendende und/oder -empfangende Elemente vorgesehen. Diese befinden sich auf einem Träger, auf dem sich auch die entsprechenden elektrischen Komponenten zur Ansteuerung der elektrooptischen Elemente befinden können. Zwischen den beiden Trägern, wovon einer den Lichtwellenleiter und der andere die Sende- und/oder Empfangselemente trägt, befindet sich eine lichtdurchlässige Zwischenlage, in der die Lichtbündel in vorgewählter Richtungen aufgeteilt werden. Die Zwischenlage kann beispielsweise eine Fresnellinse sein. Die beiden Träger können entweder verschiebbar aufeinander angeordnet sein, um eine Justage zu ermöglichen, und beispielsweise nach der Justage verklebt oder verbondet werden, es ist aber auch möglich die beiden Träger durch anisotrop geätzte komplementäre Strukturen in den Trägeroberflächen zueinander zu justieren. Außer den beiden bereits genannten Trägern können zwischen diesen auch weitere Träger vorgesehen sein, wobei beispielsweise ein Träger eine Reihe von oder zumindest einen Schalter tragen kann, der zwischen den Zuständen lichtdurchlässig und lichtundurchlässig schaltbar ist. Ein solcher Schalter kann zum Beispiel ein flächenhaftes elektrooptisch oder thermooptisch schaltbares Element, insbesondere eine LCD, sein. Diese Elemente werden in die Strahlengänge zwischen Zwischenlage Sende- bzw. Empfangselementen eingebracht, wodurch erreicht wird, daß ein Lichtwellenleiter wahlweise mit einem bestimmten Sendeelement oder Empfangselement oder mit mehreren solchen Elementen verbunden sein kann.

Aus der deutschen Patentanmeldung P 42 39 534 ist es bekannt einen Lichtwellenleiter auf der Unterseite eines Siliziumträgers in einer Nut zu führen. Das aus dem Lichtwellenleiterende austretende Licht wird in den Siliziumträger hineingeführt, wobei es den Siliziumträger nahezu senkrecht durchdringt und auf seiner Oberseite wieder austritt. Statt einer Lichtleitfaser kann auch ein Streifenleiter eingesetzt werden. Die Unterseite des Siliziumträgers ist dabei parallel zu einer kristallographischen (100)-Ebene des Siliziums ausgerichtet. Das Lichtbündel wird aus dem Lichtwellenleiter in das Innere des Siliziumwafers hineingebrochen. In geringem Abstand vom Ende des Lichtwellenleiters ist eine weitere Vertiefung anisotrop geätzt. Das Lichtbündel trifft auf die geneigte Flankenfläche dieser Vertiefung, die als Reflexionsfläche dient. Dort wird es totalreflektiert, da der Grenzwinkel der Totalreflexion zum Austritt aus dem Silizium überschritten ist. Diese aus der P 42 39 534 bekannte Anordnung, kann auch bei der erfindungsgemäßen Lösung eingesetzt werden.

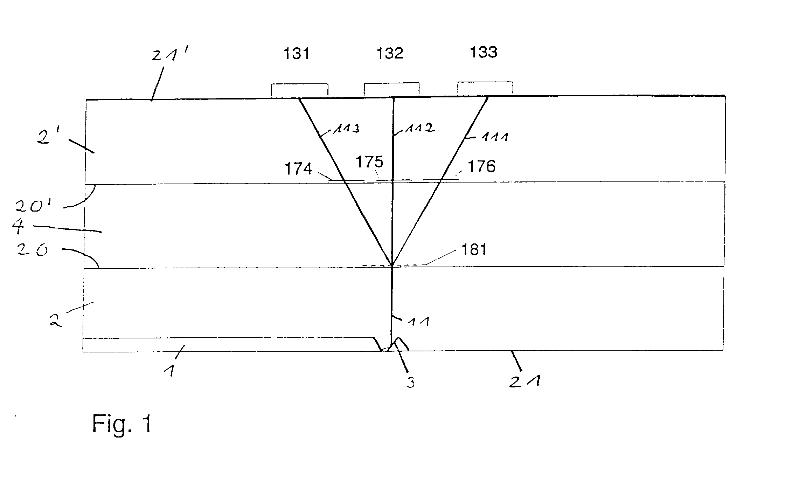

In der Figuren 1 ist ein Ausführungsbeispiel der Erfindung dargestellt.

In Figur 1 befindet sich ein Streifenleiter 1 auf einem Träger 2. Eine Kehrseite 21 weist einen Lichwellenleiter 1 auf. Das aus dem Streifenleiter 1 austretende Licht wird an der Reflexionsfläche 3 totalreflektiert. Das Lichtbündel 11 tritt auf der der Kehrseite gegenüberliegenden Grundfläche 20 aus dem Träger 2 aus. Auf dem Träger 2 befindet sich ein weiterer Träger 2' sowie ein zwischen diesen liegender Träger 4. Zwischen dem Träger 4 und dem Träger 2 ist eine Fresnellinse zur Lichtstreuung 181 vorgesehen, die das Lichtbündel 11 in Lichtbündel 111, 112, 113 mit vorgegebenen Richtungen aufteilt. Die Lichtbündel 111, 112, 113 treffen jeweils auf ein Sende- bzw. Empfangselement 131, 132, 133. Diese Sende-/Empfangselemente befinden sich auf der Kehrseite 21' des Trägers 2'. In jedem Strahlengang 111, 112, 113 befindet sich ein Schalter 174 bis 176. Mit diesen Schaltern kann das Licht zwischen den Ausgängen beliebig geschaltet werden.

Diese Schalter können flächenhafte elektrooptisch oder thermooptisch schaltbare Elemente, beispielsweise LCDs sein.

Bei einem anderen Ausführungsbeispiel sind die schaltbaren Elemente direkt unter den Sende- oder Empfangselementen auf der Oberfläche 21' angeordnet.

Statt der Sende- oder Empfangselemente 131 - 133 können auch lichtabstrahlende oder -empfangende Streifenleiter oder Faserenden in V-Nuten als lichtaussendende oder -empfangende Elemente vorgesehen sein.

## Patentansprüche

1. Anordnung zur Ankopplung eines Lichtwellenleiters (1) an mehrere lichtaussendende oder -empfangende Elemente (131, 132, 133) mit einem ersten lichtdurchlässigen Träger (2) mit einer Grundfläche und gegenüberliegenden Kehrseite, in der sich ein Lichtwellenleiter (1) und eine Reflexionsfläche (3) befinden, mit einem zweiten lichtdurchlässigen Träger (2') mit einer Grundfläche und gegenüberliegender Kehrseite, auf der lichtaussendende und/oder lichtempfangende Elemente (131,132,133) angeordnet sind, mit einer lichtdurchlässigen Zwischenlage (181), die zwischen den Grundflächen (20, 20') des ersten und des zweiten Trägers (2, 2') angeordnet ist, wobei die Zwischenlage (181) einen Bereich aufweist, der ein einfallendes Lichtbündel (11) in mehrere Lichtbündel (111,112, 113) mit vorgegebenen Richtungen aufteilt, und mit einem Schaltelement (174, 175, 176), das zwischen den Zuständen "lichtdurchlässig" und "lichtundurchlässig" schaltbar ist, und das zwischen einem der lichtaussendenden und/oder lichtempfangenden Elemente und dem genannten Bereich der Zwischenlage im Strahlgang eines der mehreren Lichtbündel angeordnet ist, wobei die Anordnung derart ausgebildet ist, daß das aus dem Lichtwellenleiter austretende Lichtbündel über die Reflexionsfläche auf den genannten Bereich der Zwischenlage fällt und daß jedes der mehreren Lichtbündel, die aus dem genannten Bereich der Zwischenlage austreten, auf eines der lichtaussendenden und/oder lichtempfangenden Elemente fällt.

2. Anordnung nach Anspruch 1, bei der die Zwischenlage eine Linse, insbesondere eine Fresnellinse (181) ist.

3. Anordnung nach einem der Ansprüche 1 oder 2, bei der der erste Träger aus Silizium ist, bei der der Lichtwellenleiter (1) auf der Kehrseite (21) in einer Nut geführt ist, bei der die Kehrseite (21) des Siliziumträgers (2) parallel zu einer kristallographischen (100)-Ebene des Siliziums ausgerichtet ist, bei der in geringem Abstand vom Ende des Lichtwellenleiters eine weitere Vertiefung anisotrop geätzt ist, so daß das Lichtbündel aus dem Lichtwellenleiter auf die geneigte Flankenfläche dieser Vertiefung trifft, die als Reflexionsfläche dient, und dort totalreflektiert wird, so daß es den Siliziumträger (2) nahezu senkrecht durchdringt und auf dessen Grundfläche (20) wieder austritt.

4. Anordnung nach einem der Ansprüche 1 bis 3, bei der flächenhafte elektrooptisch oder thermooptische schaltbare Elemente (174, 175, 176), insbesondere LCDs, eingesetzt werden.

5. Anordnung nach einem der Ansprüche 1 bis 4, bei der die Träger (2,2',4) nach Justage miteinander fixiert sind, insbesondere durch Verkleben oder Bonden.

6. Anordnung nach einem der Ansprüche 1 bis 4, bei der die Träger (2,2',4) verschiebbar aufeinander angeordnet sind.

7. Anordnung nach einem der Ansprüche 1 bis 4, bei der sich auf den Grundflächen der Träger (20',20) anisotrop geätzte komplementäre Strukturen befinden, deren Flanken zur Auflage der Träger aufeinander dienen.

8. Anordnung nach einem der Ansprüche 1 bis 4, bei der sich auf den Grundflächen der Träger (2,2') anisotrop geätzte Strukturen (17) befinden, deren Flanken jeweils zur Auflage mindestens eines den beiden Trägern (2,2') gemeinsamen Hilfselementes (18) dienen.

9. Anordnung nach einem der Ansprüche 1, 2 oder 4 bis 8, bei der die Reflexionsfläche (3) totalreflektierend ist.

10. Anordnung nach einem der Ansprüche 1 bis 9, bei der der Lichtwellenleiter ein Streifenleiter ist.

11. Anordnung nach einem der Ansprüche 1 bis 10, bei der eine Ankopplung des Lichtwellenleiters an lichtaussendende oder -empfangende Elemente an beiden Enden des Lichtwellenleiters vorgesehen ist.

12. Anordnung nach Anspruch 11, bei der der Lichtwellenleiter ganz in einem Träger verläuft.

13. Anordnung nach einem der Ansprüche 1 bis 12, bei der als lichtaussendende und/oder -empfangende Elemente optoelektronische Sende- bzw. Empfangselemente vorgesehen sind.

14. Anordnung nach einem der Ansprüche 1 bis 12, bei der als lichtaussendende und/oder -empfangende Elemente Lichtwellenleiterenden vorgesehen sind.

## Claims

1. Arrangement for coupling an optical waveguide (1) to a plurality of light-emitting or light-receiving elements (131, 132, 133) having a first light-transmitting carrier (2), having a base face and reverse side lying opposite in which there is an optical waveguide (1) and a reflective face (3), having a second translation carrier (2') with a base face and reverse side, on which light-emitting and/or light-receiving elements (131, 132, 133) are arranged, having a light-transmitting intermediate layer (181), which is arranged between the base faces (20, 20') of the first and second carriers (2, 2'), the intermediate layer (181) having an area which divides up an incident light beam (11) into a plurality of light beams (111, 112, 113) with predefined directions, and having a switching element (174, 175, 176) which can be switched between the "light-transmitting" and "non-light-transmitting" states and which is arranged between the light-emitting and/or light-receiving elements and the aforesaid region of the intermediate layer in the beam path of one of the plurality of light beams, the arrangement being designed in such a way that the light beam which emerges from the optical waveguide is incident, via the reflective face, on the aforesaid region of the intermediate layer, and that each of the plurality of light beams which emerge from the aforesaid region of the intermediate layer is incident on one of the light-emitting and/or light-receiving elements.

2. Arrangement according to Claim 1, in which the intermediate layer is a lens, in particular a Fresno lens (181).

3. Arrangement according to one of Claims 1 or 2, in which the first carrier is made of silicon, in which the optical waveguide (1) on the reverse side (21) is guided in a groove, in which the reverse side (21) of the silicon carrier (2) is aligned parallel to a crystallographic (100) plane of the silicon, in which a further depression is etched anisotropically at a short distance from the end of the optical waveguide, so that the light beam from the optical waveguide is incident on the inclined edge face of this depression, which serves as a reflective face, and is totally reflected there, so that it penetrates the silicon carrier (2) almost vertically and emerges again from its base face (20).

4. Arrangement according to one of Claims 1 to 3, in which planar electro-optical or thermo-optical switchable elements (174, 175, 176), in particular LCDs, are used.

5. Arrangement according to one of Claims 1 to 4, in which, after adjustment, the carriers (2, 2', 4) are secured to one another, in particular by adhering or bonding.

6. Arrangement according to one of Claims 1 to 4, in which the carriers (2, 2', 4) are displaceably arranged on one another.

7. Arrangement according to one of Claims 1 to 4, in which structures which are anisotropically etched in a complementary fashion and whose edges serve to support the carriers one on top of the other are located on the base faces of the carriers.

8. Arrangement according to one of Claims 1 to 4, in which anisotropically etched structures (17), whose edges serve in each case to support at least one auxiliary element (18) which is common to the two carriers (2, 2'), are located on the base faces of the carriers (2, 2').

9. Arrangement according to one of Claims 1, 2 or 4 to 8, in which the reflective face (3) is totally reflective.

10. Arrangement according to one of Claims 1 to 9, in which the optical waveguide is a stripline.

11. Arrangement according to one of Claims 1 to 10, in which there is provision for the optical waveguide to be coupled to light-emitting or light-receiving elements at both ends of the optical waveguide.

12. Arrangement according to Claim 11, in which the optical waveguide runs entirely in a carrier.

13. Arrangement according to one of Claims 1 to 12, in which opto-electronic transmitting or receiving elements are provided as light-emitting and/or light-receiving elements.

14. Arrangement according to one of Claims 1 to 12, in which optical waveguide ends are provided as light-emitting and/or light-receiving elements.

## Revendications

1. Dispositif de couplage d'un guide d'ondes lumineuses (1) à plusieurs éléments (131, 132, 133) qui émettent ou reçoivent de la lumière avec un premier support (2) translucide, comprenant une surface de base et un verso opposé, dans lequel se trouve un guide d'ondes lumineuses (1) et une surface de réflexion (3), un deuxième support (2') translucide avec une surface de base et un verso opposé, sur lequel sont disposés des éléments (131, 132, 133) qui émettent de la lumière et/ou qui reçoivent de la lumière, une couche intermédiaire (181) translucide qui est disposée entre les surfaces de base (20, 20') du premier et du deuxième support (2, 2'), la couche intermédiaire (181) présentant une zone qui subdivise un faisceau de lumière incident (11) en plusieurs faisceaux de lumière (111, 112, 113) dans des directions prédéfinies, et un élément d'interruption (174, 175, 176) qui peut être mis dans une position qui "laisse passer la lumière" ou "ne laisse pas passer la lumière", et qui est disposé entre l'un des éléments, qui émettent de la lumière ou qui reçoivent de la lumière, et la zone mentionnée de la couche intermédiaire sur le trajet de l'un des multiples faisceaux de lumière, le système étant caractérisé par le fait que le faisceau de lumière qui sort du guide d'ondes lumineuses tombe au moyen de la surface de réflexion à partir de la zone mentionnée de la couche intermédiaire, sur l'un des éléments qui émettent de la lumière ou qui reçoivent de la lumière.

2. Dispositif selon la revendication 1,
caractérisé en ce que
la couche intermédiaire est une lentille, en particulier une lentille de Fresnel (181).

3. Dispositif selon l'une des revendications 1 ou 2,
caractérisé en ce que
le premier support est en silicium, on fait passer le guide d'ondes lumineuses (1) dans une rainure sur le verso (21), on oriente le verso (21) du support en silicium (2) parallèlement à un plan cristallographique (100) du silicium, un autre renfoncement est gravé de façon anisotrope à une faible distance de l'extrémité du guide d'ondes lumineuses, de telle sorte que le faisceau de lumière en sortant du guide d'ondes lumineuses tombe sur le flanc incliné de ce renfoncement, qui sert de surface de réflexion, et soit à cet endroit totalement réfléchi, de telle sorte qu'il traverse presque perpendiculairement le support de silicium (2) et ressorte sur sa surface de base (20).

4. Dispositif selon l'une des revendications 1 à 3,
caractérisé en ce qu'
on utilise des éléments adhérents (174, 175, 176) qui peuvent être branchés de façon optoélectronique ou thermooptique, en particulier un affichage à cristaux liquides.

5. Dispositif selon l'une des revendications 1 à 4,
caractérisé en ce que
les supports (2, 2', 4) sont fixés les uns aux autres après ajustage, en particulier par collage ou en procédant à un bonding.

6. Dispositif selon l'une des revendications 1 à 4,
caractérisé en ce qu'
on dispose les supports (2, 2', 4) de façon à ce qu'ils puissent coulisser les uns sur les autres.

7. Dispositif selon l'une des revendications 1 à 4,
caractérisé en ce que
des structures complémentaires gravées de façon anisotrope se trouvent sur les surfaces de base des supports (20', 20), structures dont les flancs servent d'appui aux supports.

8. Dispositif selon l'une des revendications 1 à 4,
caractérisé en ce que
des structures (17) gravées de façon anisotrope se trouvent sur les surfaces de base des supports (2', 2), structures dont les flancs servent respectivement d'appui à au moins un élément auxiliaire (18), commun aux deux supports (2, 2').

9. Dispositif selon l'une des revendications 1, 2 ou 4 à 8,
caractérisé en ce que
la surface de réflexion (3) effectue une réflexion totale.

10. Dispositif selon l'une des revendications 1 à 9,
caractérisé en ce que
le guide d'ondes lumineuses est un guide d'ondes à rubans.

11. Dispositif selon l'une des revendications 1 à 10,
caractérisé en ce qu'
on prévoit un accouplement du guide d'ondes lumineuses à des éléments qui émettent de la lumière ou qui reçoivent de la lumière aux deux extrémités du guide d'ondes lumineuses.

12. Dispositif selon la revendication 11,
caractérisé en ce que
le guide d'ondes lumineuses s'étend tout entier dans un support.

13. Dispositif selon l'une des revendications 1 à 12,
caractérisé en ce qu'
on prévoit comme éléments qui émettent de la lumière ou qui reçoivent de la lumière des éléments d'émission ou de réception optoélectroniques.

14. Dispositif selon l'une des revendications 1 à 12,
caractérisé en ce qu'
on prévoit comme éléments qui émettent de la lumière et/ou qui reçoivent de la lumière des extrémités de guide d'ondes lumineuses.
